# EUROPÄISCHE PATENTANMELDUNG

(11) **EP 3 089 112 A1**
(43) Veröffentlichungstag der Anmeldung: **02.11.2016**
(21) Anmeldenummer: 16167283.7
(22) Anmeldetag: 27.04.2016
(51) Int. Cl.: G06T 7/00, G01N 21/88

(54) **VERFAHREN UND VORRICHTUNG ZUR ÜBERPRÜFUNG DER PRODUKTQUALITÄT VON ZWEIDIMENSIONALEN PRODUKTEN**

(30) Priorität: 27.04.2015 DE 102015207687
(71) Anmelder: Fabryki Mebli "Forte" SA, 07-300 Ostrow Mazowiecka (PL)
(72) Erfinder: DAHLEM, Klaus Dieter, 57520 Grosbliederstroff (FR)
(74) Vertreter: Hoefer & Partner Patentanwälte mbB

(57) **Zusammenfassung**

Die Erfindung betrifft ein Messsystem (1) mit einem Tisch (2), der eine plane Auflagefläche (3) aufweist; mit je einer Beleuchtungseinrichtung (4A, 4B) oberhalb bzw. unterhalb der Auflagefläche (3); mit einer ortsfesten Kamera (5), die oberhalb der Auflagefläche (3) angeordnet ist; und mit einer Qualitätsbestimmungseinrichtung (6), die umfasst: eine Datenbank (7) für elektronische Zeichnungen (EZ); eine Analyseeinrichtung (8), die über eine erste Signalleitung (9) mit der ortsfesten Kamera (5) und eine zweite Signalleitung (10) mit der Datenbank (7) zur Bild- bzw. Datenübertragung verbunden ist; und eine Anzeigeeinrichtung (20) zur optischen Anzeige des Bestimmungsergebnisses.

## Beschreibung

Die Erfindung betrifft ein Verfahren und eine Vorrichtung zur Überprüfung der Produktqualität von zweidimensionalen Produkten gemäß Anspruch 1 bzw. Anspruch 7.

Um die Produktqualität von Produkten bzw. Werkstücken bestimmen zu können, ist beispielsweise aus der DE 35 41 570 A1 ein Messtisch bekannt, der einen in Quer- und Längsrichtung des Messtisches verfahrbaren Messkopf aufweist, um Konstruktionselemente des Werkstücks, wie beispielsweise Bohrungen hinsichtlich deren Position untersuchen zu können.

Ferner sind Messsysteme bekannt, bei denen Scannereinrichtungen verwendet werden, wobei jedoch in beiden Fällen der technische Aufwand relativ hoch ist, da die Messköpfe bzw. Scannereinrichtungen üblicherweise in Längs- und Querrichtung des Messtisches verfahrbar ausgestaltet werden müssen, um die Konstruktionselemente und auch die Außenkontur sowie deren Maße des zu untersuchenden Werkstücks bestimmen zu können.

Es ist demgegenüber Aufgabe der vorliegenden Erfindung, ein Verfahren sowie ein Messsystem zur Bestimmung der Produktqualität von zweidimensionalen Produkten bzw. Werkstücken zu schaffen, die eine relativ einfache technische Betriebsweise und einen dementsprechend gegenüber dem Stand der Technik vereinfachten Aufbau ermöglichen.

Hinsichtlich des erfindungsgemäßen Verfahrens erfolgt die Lösung dieser Aufgabe durch die Merkmale des Anspruchs 1. Das erfindungsgemäße Verfahren zeichnet sich im Einzelnen durch folgende Verfahrensschritte aus:
Bei den zu untersuchenden Produkten bzw. Werkstücken handelt es sich um zweidimensionale Werkstücke, wobei sich die Zweidimensionalität aus der Betrachtungsrichtung auf das Werkstück ergibt, das natürlich neben einer Breiten- und Längsdimension auch eine Werkstückdicke umfasst, wobei das Werkstück aufgrund der Betrachtungsrichtung auf die Werkstückoberfläche beim Analysevorgang jedoch als zweidimensionaler Gegenstand erscheint.

Die Konstruktionselemente, die mit dem erfindungsgemäßen Verfahren überprüft bzw. untersucht werden können, sind beispielsweise im Rahmen des Fertigungsverfahrens des Werkstücks angebrachte Ausnehmungen, wie Bohrungen und/oder Nuten, wie auch die äußere Kontur des jeweiligen Werkstückes und die Werkstückmaße. Die Konstruktionselemente können hierbei hinsichtlich ihrer Position auf dem Werkstück, wie auch hinsichtlich ihrer Dimension, wie beispielsweise des Bohrungsdurchmessers, untersucht werden.

Ein Beispiel für zu untersuchende Produkte bzw. Werkstücke sind Möbelteile, wie beispielsweise die Wände, der Boden und das Deckteil eines Schrankes, die werkseitig mit den erforderlichen Bohrungen und Konturen versehen werden, die zur letztendlichen Montage des Möbels erforderlich sind, wobei diese Endmontage entweder werkseitig erfolgen kann oder die einzelnen Möbelteile dem Kunden im unmontierten Zustand geliefert werden, so dass der Kunde das Möbel selber montieren kann.

Um die Produktqualität derartiger Möbelteile, wie jedoch auch anderer Werkstücke, die ebenfalls mit dem erfindungsgemäßen Verfahren überprüft werden können, analysieren zu können, werden regelmäßig, insbesondere bei Massenfertigungen, Werkstückproben aus der Fertigung entnommen und diese auf ihre Maßhaltigkeit bzw. insgesamt auf ihre Produktqualität untersuchen zu können.

Wird für die Durchführung des erfindungsgemäßen Verfahrens dementsprechend ein Produkt bzw. Werkstück zur Untersuchung der Fertigungslinie entnommen, wird dieses Produkt bzw. Werkstück auf eine plane Auflagefläche eines Messtisches aufgelegt. Der Messtisch kann hierbei mit einer Positionierungshilfe, wie beispielsweise einem zentrisch angeordneten Fadenkreuz, versehen sein, auf dem das Werkstück für die Durchführung der Qualitätsbestimmung aufgelegt wird. Vom Prinzip her ist jedoch die Ausrichtung des zu untersuchenden Werkstücks auf der Auflagefläche nicht von Bedeutung, da das erfindungsgemäße Verfahren auch die Analyse eines außermittig oder hinsichtlich der Positionierungshilfe versetzt angeordneten Werkstücks ermöglicht.

Nachdem das Werkstück auf der Auflagefläche aufgelegt worden ist, wird eine elektronisch erstellte zugehörige Konstruktionszeichnung für das zu untersuchende Werkstück ausgewählt, was beispielsweise durch die Eingabe einer Konstruktionsnummer oder durch die Aufnahme eines Barcodes erfolgen kann.

Unter "elektronischer Konstruktionszeichnung" wird erfindungsgemäß eine Zeichnung verstanden, die auf der ursprünglichen Konstruktionszeichnung mit Bemaßungen hinsichtlich der Außenmaße und der Positionierung der Konstruktionselemente, wie beispielsweise von Bohrungen, beruht. Bei der elektronischen Umsetzung dieser ursprünglichen Konstruktionszeichnung werden jedoch diese Bemaßungen entfernt und die entsprechende positionsgenaue Anordnung der Konstruktionselemente sowie die Außenkontur und die Abmessungen der Außenkontur des Werkstücks elektronisch (z.B. mit Hilfe eines Vektor-Winkel-Systems in einem x-y-Koordinatensystem) umgesetzt, wozu beispielsweise eine Datei der elektronischen Zeichnung im DXF-Format angelegt werden kann.

Zur Untersuchung der Produktqualität wird sodann das auf der Auflagefläche positionierte Werkstück bei zeitgleicher Beleuchtung, insbesondere einer Blitzlichtbeleuchtung, fotografiert.

Im nächsten Schritt wird das so aufgenommene Foto des zu untersuchenden Werkstücks einer Qualitätsbestimmungseinrichtung auf elektronische Weise zugeführt, wonach die Qualitätsbestimmung, beispielsweise durch Analyse der Werkstückkontur, deren Dimensionen und/oder der Positionierung von Konstruktionselementen einschl. deren Dimensionierung gestartet wird. Bei dieser Produktanalyse wird zunächst elektronisch der Maßstab der elektronischen Zeichnung an das Produktfoto angepasst, was den Vorteil ergibt, dass vom Prinzip her die Produktgröße beliebig sein kann, vorausgesetzt die Auflagefläche erlaubt das Auflegen entsprechend großer Werkstücke.

Vom Prinzip her wird ferner hierbei die elektronische Zeichnung dem Produktfoto überlagert, so dass es einer Analysesoftware möglich ist, die Dimensionierung des zu untersuchenden Produktes bzw. Werkstückes anhand des Fotos durch Vergleich mit der überlagerten elektronischen Zeichnung zu bestimmen, um, wie gesagt, die Außenkontur, deren Dimensionierung sowie die Positionierung und Dimensionierung von Konstruktionselementen, wie insbesondere von Bohrungen und/oder Nuten, zur Bestimmung der Produktqualität ermitteln zu können.

Nach der Durchführung dieser elektronischen Analyse wird das Ergebnis der Qualitätsuntersuchung optisch angezeigt. Hierbei ist es besonders bevorzugt, die optische Anzeige hinsichtlich nicht zu beanstandeter Produktqualität, unangemessener Produktqualität und zu überprüfender Produktqualität farblich zu unterscheiden. Beispielsweise ist es möglich, ein nicht zu beanstandendes Produkt hinsichtlich seiner Kontur und seiner Konstruktionselemente grün zu unterlegen, ein Ausschussprodukt rot zu unterlegen und ein noch zu überprüfendes Produkt gelb zu unterlegen, um der Bedienperson den Qualitätsüberprüfungsvorgang weiter erleichtern zu können.

Wie zuvor bereits erwähnt, ist bei einer besonders bevorzugten Ausführungsform des erfindungsgemäßen Verfahrens vorgesehen, dass die Beleuchtung des zu untersuchenden Werkstücks in Form einer Blitzlichtbeleuchtung erfolgt, was den Vorteil ergibt, dass Verschattungen des Fotos vermieden werden können. Bei einer besonders bevorzugten Ausführungsform wird hierbei die Beleuchtung sowohl von oben als auch von unten auf das zu untersuchende Werkstück bzw. Produkt durchgeführt.

Eine weitere Bedienungserleichterung ergibt sich, wenn das Auslösen des Fotografiervorgangs auch den Beleuchtungsvorgang initiiert bzw. triggert.

Ferner ist es erfindungsgemäß möglich, das Untersuchungsergebnis in einem Protokoll zu speichern, um die Produktqualität einer Fertigungslinie dokumentieren zu können.

Hinsichtlich der erfindungsgemäßen Vorrichtung wird die Aufgabe der Erfindung durch die Merkmale des Anspruches 7, der ein Messsystem gemäß den erfindungsgemäßen Prinzipien definiert, gelöst.

Die Unteransprüche 8 bis 11 haben vorteilhafte Weiterbildungen des Messsystems gemäß Anspruch 7 zum Inhalt.

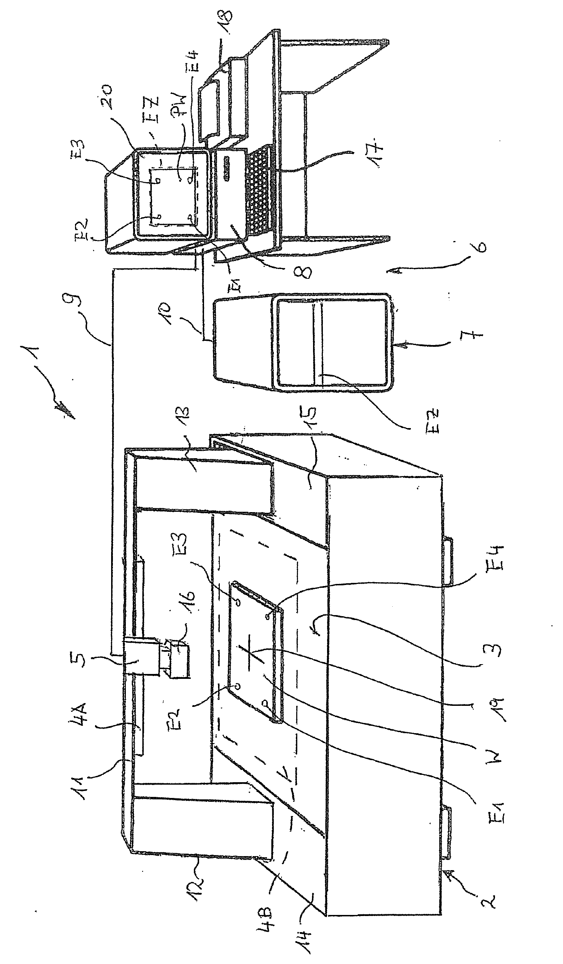

Weitere Einzelheiten, Vorteile und Merkmale der vorliegenden Erfindung ergeben sich aus nachfolgender Beschreibung einer Ausführungsform eines erfindungsgemäßen Messsystems anhand der einzigen Figur der Zeichnung.

Dementsprechend weist das erfindungsgemäße Messsstem 1 einen Tisch bzw. Messtisch 2 auf, der eine plane Auflagefläche 3 umfasst.

Das Messsystem 1 weist ferner eine Beleuchtungseinrichtung auf, die bei der in der Figur dargestellten, besonders bevorzugten Ausführungsform eine erste Beleuchtungseinrichtung 4A umfasst, die oberhalb der Auflagefläche 3 angeordnet ist. Hierbei ist bei der in der Figur dargestellten, besonders bevorzugten Ausführungsform eine Traverse 11 vorgesehen, die sich oberhalb der Auflagefläche 3 erstreckt und an zwei Säulen 12 und 13 abgestützt ist, die auf Abstützbereichen 14 und 15 jeweils neben der Auflagefläche 3 fixiert sind. Bevorzugterweise ist die erste Beleuchtungseinrichtung 4A als Blitzlichteinrichtung, insbesondere aus LED-Elementen, ausgebildet.

Die Beleuchtungseinrichtung der besonders bevorzugten Ausführungsform gemäß der Figur weist ferner eine zweite Beleuchtungseinrichtung 4B auf, die unterhalb der Auflagefläche 3 angeordnet ist, so dass eine Beleuchtung eines zu untersuchenden Objektes sowohl von unten als auch von oben erfolgen kann. Die unterhalb der Auflagefläche 3 angeordnete zweite Beleuchtungseinrichtung 4B ist unmittelbar unterhalb der Auflagefläche 3 innerhalb des Tisches 2 angeordnet und ist bevorzugterweise ebenfalls als Blitzlichteinrichtung aus LED-Elementen aufgebaut.

Das Messsystem 1 weist ferner eine Kamera 5 auf, die, wie die Figur verdeutlicht, oberhalb der Auflagefläche 3 ortsfest an der Traverse 11 angeordnet ist, da eine Verschiebbarkeit der Kamera 5 gemäß den Prinzipien vorliegender Erfindung weder in Längs- noch in Breitenrichtung der Auflagefläche 3 erforderlich ist. Dies vereinfacht den Aufbau des erfindungsgemäßen Messsystems 1 im Vergleich zu bekannten Anordnungen erheblich. Die Kamera 5 ist bei der in der Figur dargestellten besonders bevorzugten Ausführungsform ferner mit einem Objektiv 16 versehen, um die Aufnahmequalität zu verbessern. Hierbei ist es möglich, unterschiedliche Objektive je nach zu fotografierendem Gegenstand bzw. Werkstück vorzusehen.

Das erfindungsgemäße Messsystem 1 weist ferner eine Qualitätsbestimmungseinrichtung 6 auf.

Die Qualitätsbestimmungseinrichtung 6 umfasst eine Datenbank 7 für elektronische Zeichnungen EZ, die in der eingangs erläuterten Art und Weise elektronisch auf der Basis der Original-Konstruktionszeichnungen der zu untersuchenden Produkte bzw. Werkstücke erzeugt werden und in der Datenbank 7 abgespeichert werden. Zur Identifizierung dieser elektronischen Zeichnungen EZ können Barcodes oder Zeichnungsnummern verwendet werden, die über einen in der Figur nicht näher dargestellten Barcode-Leser oder eine Tastatur 17 in eine Analyseeinrichtung 8 eingegeben werden können.

Die Analyseeinrichtung 8, die ein geeigneter Rechner sein kann, ist über eine erste Signalleitung 9 mit der Kamera 5 verbunden. Ferner ist die Analyseeinrichtung 8 über eine zweite Signalleitung 10 mit der Datenbank 7 verbunden, damit eine Bild- und Datenübertragung von der Kamera 5 bzw. der Datenbank 7 in die Analyseeinrichtung 8 möglich ist.

Ferner weist die Qualitätsbestimmungseinrichtung 6 eine Anzeigeeinrichtung 20 auf, beispielsweise in Form eines Computer-Bildschirms, auf der erforderliche Anzeigen für die Durchführung des erfindungsgemäßen Verfahrens angezeigt werden können.

Schließlich weist die Qualitätsbestimmungseinrichtung 6 bei der in der Figur dargestellten besonders bevorzugten Ausführungsform einen Drucker 18 auf, der mit der Analyseeinrichtung 8 in Signalverbindung steht, um Analyseergebnisse ausdrucken zu können. Ein derartiger Drucker 18 ist jedoch nicht unbedingt erforderlich.

Um die Produktqualität eines zu untersuchenden Produktes bzw. Werkstückes bestimmen zu können, wird ein zu untersuchendes Werkstück W auf die Auflagefläche 3 aufgelegt und vorzugsweise auf dieser entsprechend einer Positionierungshilfe 19, beispielsweise in Form des in der Figur eingezeichneten Fadenkreuzes, ausgerichtet. Wie eingangs bereits erläutert wurde, ist jedoch eine exakte Ausrichtung des zu untersuchenden Werkstücks W auf der Auflagefläche 3 nicht unbedingt erforderlich, da Abweichungen von einer optimalen Anordnung elektronisch ausgeglichen werden können, ohne dass das Untersuchungsergebnis negativ beeinflusst wird.

Das in der Figur beispielhaft dargestellte Werkstück W weist vier Konstruktionselemente E1 bis E4 auf, bei denen sich, rein beispielshaft zum Zwecke der Erläuterung der Prinzipien vorliegender Erfindung um vier Bohrungen handelt, die in den Eckbereichen des Werkstücks W angeordnet sind. Der Untersuchung können jedoch auch die Außenabmessungen sowie die Kontur des Werkstücks W zugrundegelegt werden, wobei die Konturen nicht auf gerade Kanten beschränkt ist, sondern vielmehr auch gerundete Randbereiche, wie beispielsweise bei kreisförmigen Werkstücken, umfassen kann.

Um die Untersuchung der Produktqualität durchführen zu können, wird das auf der Auflagefläche 3 positionierte Werkstück W mit der Kamera 5 und seinem Objektiv 16 fotografiert. Dieser Vorgang kann beispielsweise über die Tastatur 17 der Analyseeinrichtung 8 ausgelöst werden, wobei die Auslösung des Fotos mit Hilfe der Kamera 6 die Beleuchtung mit Hilfe der ersten und zweiten Beleuchtungseinrichtung 4A und 4B triggert, so dass die Beleuchtung zeitgleich mit dem Fotografiervorgang erfolgt und hierbei vorzugsweise als Blitzlichtbeleuchtung durchgeführt wird, was negative Verschattungen des zu erzeugenden Fotos vermeidet.

Bevor das Foto des zu untersuchenden Werkstücks W aufgenommen wird, wird beispielsweise über eine Eingabe einer Zeichnungsnummer eine in der Datenbank 7 gespeicherte Zeichnung, die in der Figur schematisch stark vereinfacht durch die Doppellinie EZ symbolisiert ist, ausgewählt und über die Datenleitung 10 in die Analyseeinrichtung 8 eingegeben. Danach wird über die Datenleitung 9 das aufgenommene Foto von der Kamera 5 ebenfalls in die Analyseeinrichtung 8 übertragen. Hiernach kann der Analysevorgang durch entsprechende Befehlseingabe gestartet werden, wobei die elektronische Zeichnung EZ dem Produktfoto PW elektronisch überlagert wird, was auf der Anzeigeeinrichtung 11 der Figur dadurch symbolisiert ist, dass das Produktfoto PW von der gestrichelt dargestellten elektronischen Zeichnung EZ umgeben ist. Durch diese elektronische Überlagerung der elektronischen Zeichnung EZ auf das Produktfoto PW ist es möglich, die Außenkontur, deren Dimension sowie die Positionierung und Maßhaltigkeit der Konstruktionselemente E1 bis E4 elektronisch zu bestimmen und nach der Bestimmung auf der Anzeigeeinrichtung 11 darzustellen, wie dies eingangs erläutert wird, wozu beispielsweise farbliche Unterlegungen hilfreich sind.

Das Untersuchungsergebnis kann abschließend elektronisch in einem Protokoll gespeichert und gegebenenfalls über den Drucker 18 in Papierform ausgedruckt werden.

Sollte das zu untersuchende Werkstück W auch auf seiner der in der Zeichnung nicht sichtbaren unteren Fläche weitere Konstruktionselemente aufweisen, kann das Werkstück W für einen weiteren Analysevorgang um 180° gewendet und erneut auf der Auflagefläche 3 positioniert werden, um einen weiteren Analysevorgang entsprechend der voranstehenden Beschreibung durchführen zu können.

Neben der vorstehenden schriftlichen Beschreibung der Erfindung wird zu deren ergänzender Offenbarung hiermit explizit auf die zeichnerische Darstellung der Erfindung in der Figur Bezug genommen und verwiesen.

### Bezugszeichenliste

- 1: Messsystem
- 2: Tisch/Messtisch
- 3: Auflagefläche
- 4A,B: Beleuchtungseinrichtung
- 5: Kamera
- 6: Qualitätsbestimmungseinrichtung
- 7: Datenbank
- 8: Analyseeinrichtung
- 9: Signalleitung
- 10: Signalleitung
- 11: Traverse
- 12, 13: Säulen
- 14, 15: Abstützbereiche
- 16: Objektiv
- 17: Tastatur
- 18: Drucker
- 19: Positionierungshilfe
- 20: Anzeigeeinrichtung/Bildschirm
- W: Werkstück/zu untersuchendes Produkt
- E1-E4: Konstruktionselemente, wie insbesondere Bohrungen
- EZ: Elektronische Zeichnung
- PW: Produkt-/Werkstückfoto

## Patentansprüche

1. Verfahren zur Überprüfung der Produktqualität von Konstruktionselementen (E1-E4) eines zweidimensionalen Produktes (W) mit folgenden Verfahrensschritten:
- Auflegen des Produktes (W) auf eine Messfläche bzw. Auflagefäche (3);
- Auswählen einer zugeordneten elektronischen Konstruktionszeichnung (EZ) des zu untersuchenden Werkstücks (W) und Übertragen in eine elektronische Analyseeinrichtung (8);
- Beleuchten des Werkstücks (W) während der Durchführung eines Fotografiervorganges zur Aufnahme eines Werkstückfotos (PW);
- Übertragen des Werkstückfotos (PW) in die elektronische Analyseeinrichtung (8) einer Qualitätsbestimmungseinrichtung (6);
- Elektronisches Überlagern der ausgewählten elektronischen Konstruktionszeichnung (EZ) auf das übertragende Werkstückfoto (PW); und
- Bestimmung, ob die tatsächliche Produktqualität der durch die elektronische Konstruktionszeichnung (EZ) definierten Produktqualität entspricht, wobei die elektronische Information, die in der elektronischen Zeichnung (EZ) enthalten ist, zur Analyse der Konstruktionselemente (E1-E4) herangezogen wird.

2. Verfahren nach Anspruch 1, **dadurch gekennzeichnet, dass** beim Analysevorgang die Kontur und/oder die Dimensionierung des zu untersuchenden Werkstücks (W) bzw. die Positionierung und/oder die Dimensionierung der Konstruktionselemente (E1-E4) bestimmt wird.

3. Verfahren nach Anspruch 1 oder 2, **dadurch gekennzeichnet, dass** die elektronische Zeichnung (EZ) im DXF-Format erstellt wird.

4. Verfahren nach einem der Ansprüche 1 bis 3, **dadurch gekennzeichnet, dass** die Beleuchtung des zu fotografierenden Werkstücks (W) als Blitzlichtbeleuchtung durchgeführt wird.

5. Verfahren nach einem der Ansprüche 1 bis 4, **dadurch gekennzeichnet, dass** die Auslösung des Fotografiervorganges den Beleuchtungsvorgang initiiert.

6. Verfahren nach einem der Ansprüche 1 bis 5, **dadurch gekennzeichnet, dass** eine optische Anzeige des Untersuchungsergebnisses, vorzugsweise durch farbliche Unterlegung, erfolgt.

7. Messsystem (1)
- mit einem Tisch (2), der eine plane Auflagefläche (3) aufweist;
- mit je einer Beleuchtungseinrichtung (4A, 4B) oberhalb bzw. unterhalb der Auflagefläche (3);
- mit einer ortsfesten Kamera (5), die oberhalb der Auflagefläche (3) angeordnet ist; und
- mit einer Qualitätsbestimmungseinrichtung (6), die umfasst:
• eine Datenbank (7) für elektronische Zeichnungen (EZ);
• eine Analyseeinrichtung (8), die über eine erste Signalleitung (9) mit der ortsfesten Kamera (5) und eine zweite Signalleitung (10) mit der Datenbank (7) zur Bild- bzw. Datenübertragung verbunden ist; und
• eine Anzeigeeinrichtung (20) zur optischen Anzeige des Bestimmungsergebnisses.

8. Messsystem nach Anspruch 7, **dadurch gekennzeichnet, dass** die Beleuchtungseinrichtung (4A, 4B) als Blitzlichteinrichtung ausgebildet ist.

9. Messsystem nach Anspruch 7 oder 8, **dadurch gekennzeichnet, dass** die zweite Beleuchtungseinrichtung (4B) im Tisch (2) unmittelbar unter der Auflagefläche (3) angeordnet ist.

10. Messsystem nach einem der Ansprüche 7 bis 9, **dadurch gekennzeichnet, dass** die oberhalb der Auflagefläche (3) angeordnete Beleuchtungseinrichtung (4A) an einer Traverse (11) befestigt ist.

11. Messsystem nach einem der Ansprüche 7 bis 10, **dadurch gekennzeichnet, dass** die Kamera (5) mit einem Objektiv (16), insbesondere einem Wechselobjektiv, versehen ist.
